(19) Europäisches Patentamt
European Patent Office
Office européen des brevets

(11) Publication number: 0 065 863
B1

(12) EUROPEAN PATENT SPECIFICATION

(45) Date of publication of patent specification: 21.09.88

(21) Application number: 82302486.4

(22) Date of filing: 17.05.82

(51) Int. Cl.[4]: C 01 B 13/32, C 01 B 13/18, C 01 B 33/12, C 01 F 7/36, C 01 G 23/053, C 01 G 25/02, C 01 F 17/00, C 01 G 43/025

# (54) Method of producing ceramic-forming metal hydroxide and oxide powders.

(30) Priority: 18.05.81 US 264323

(43) Date of publication of application: 01.12.82 Bulletin 82/48

(45) Publication of the grant of the patent: 21.09.88 Bulletin 88/38

(84) Designated Contracting States: DE FR GB SE

(56) References cited:
DE-A-1 903 066
DE-C- 883 744
DE-C- 903 691
US-A-4 357 427

JOURNAL OF THE AMERICAN CERAMIC SOCIETY, vol. 65, no. 8, August 1982, pages 387-393, Columbus, Ohio, USA, B.E. YOLDAS: "Effect of variations in polymerized oxides on sintering and crystalline transformations"

(73) Proprietor: WESTINGHOUSE ELECTRIC CORPORATION
Westinghouse Building Gateway Center
Pittsburgh Pennsylvania 15222 (US)

(72) Inventor: Yoldas, Bulent Erturk
1605 Jamestown Place
Pittsburgh Pennsylvania (US)

(74) Representative: Marchant, James Ian et al
Elkington and Fife High Holborn House
52/54 High Holborn
London WC1V 6SH (GB)

(56) References cited:
JOURNAL OF APPLIED CHEMISTRY & BIOTECHNOLOGY, vol. 23, no. 11, November 1973, pages 803-809, B.E. YOLDAS: "Hydrolysis of aluminium alkoxides and bayerite conversion"

EP 0 065 863 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to the use of metal hydroxide and oxide powders for the manufacture of ceramics.

Ceramics of various metal oxides are widely used as high temperature containers, as substrates in electronic components, and in a variety of industrial and commercial applications. The strength of these ceramics is one of their most important physical properties. The strength is related to the density of the ceramic so that it is desirable to prepare ceramics of high density in order to increase their strength. High density may also be desirable to reduce porosity or permeability to gases and liquids. Also, a ceramic which is electrically conductive or doped to render it conducting will be a better conductor if it is denser.

Metal oxide ceramics can be prepared from metal alkoxides. An alkoxide may be thermally degraded to produce oxide as in the equation

$$M(OR)_n \rightarrow MO_{n/2} + n/2\ R(OH) + \text{olefins}$$

Oxides can also be prepared by hydrolysis and degradation of alkoxides as in the equations

$$M(OR)_n + nH_2O \rightarrow M(OH)_n + nR(OH)$$

$$M(OH)_n \rightarrow MO_{n/2} + n/2\ H_2O$$

where M is a metal having a valence n, and R is the alkyl radical $C_xH_{2x} + {}_1$.

An article by Sumio Sakka and Kanichi Kamiya titled "Glasses From Metal Alcholates" in the Journal of Non-Crystalline Solids 42 (1980), pages 403 to 421 discusses the sintering of oxide powders prepared from alkoxides.

An article by K. S. Mazdiyasni et al. titled "Preparation of Ultra-High-Purity Submicron Refractory Oxides in the Journal of the American Ceramic Society, Vol. 48, No. 7, July 1965 also discusses the preparation of oxide powders from alkoxides. Also see an article by B. E. Yoldas titled "Preparation of Glasses and Ceramics from Metal-Organic Compounds" in the Journal of Materials Science 12 (1977) 1203-1208 and U.S. Patent 3,357,791.

The effect of temperature on the conversion of aluminum monohydroxide to aluminum trihydroxide is discussed by B. E. Yoldas in an article titled "Hydrolysis of Aluminum Alkoxides and Bayerite Conversion," in the Journal of Applied Chemistry and Biotechnology 1973, 23, pages 803 to 809.

In suitable systems the simultaneous degradation and hydrolysis of alkoxides provides molecular level homogeneity in multicomponent materials and may be employed to prepare mixed and doped oxides. These oxides sinter to dense bodies at lower temperatures than do classical oxides due to their smaller particle size.

The present invention provides the use of a metal oxide powder capable of being sintered to a high density characterized by hydrolyzing metal alkoxide having the general formula $M(OR)_n$ where M is an alkoxide-forming metal, R is alkyl to $C_6$ and n is the valence of M, with from 5 to 10 moles of water per mole of said alkoxide to produce a hydroxide, collecting said hydroxide and heating the latter to produce said metal oxide powder for the manufacture of ceramics.

It has now been discovered that there is a relationship between the amount of water used to hydrolyze the alkoxides from which metal oxide powders are prepared and the degree of densification of the sintered metal oxide powder. The degree of densification of the metal oxide powder increases with the amount of water used to hydrolyze the alkoxide up to about 5 to 7 moles of water per mole of alkoxide, when additional water does not produce a significant additional degree of densification, and in some systems, e.g., $Al_2O_3$, may even be slightly detrimental. This discovery enables one to produce oxide powders with exceptional capability to sinter and densify. It also allows one to obtain a predetermined density of the sintered metal oxide by determining the exact relationship between the degree of hydrolysis of the alkoxide to be used in preparing the metal oxide and its sintered density, and then hydrolyzing the alkoxide to the degree necessary to achieve the desired predetermined density. The present invention enables metal oxide ceramics of remarkably greater densification to be produced or powders which resist densification when such a property is desirable.

In addition, it has been found that $Al_2O_3$ derived from aluminum trihydroxide, $Al(OH)_3$, densifies at a significantly greater rate than does $Al_2O_3$ produced by calcining aluminum monohydroxide. As a result of these discoveries, unique hydroxides of aluminum and titanium have been produced which sinter to high densities.

Densification during the sintering process involves a lowering of the surface free energy by decreasing the surface area. This decrease in the surface area occurs by various transport mechanisms in which particle shape and size play a fundamental role. In this invention it is shown that the internal or molecular structure of the particles also plays a significant role and alters the sintering behavior of oxides.

This invention teaches how such variations can be introduced in oxide systems by controlled hydrolysis and polymerization reactions during the formation of oxides from metal alkoxides, in such a way that these structural variations significantly alter the densification behavior, allowing a large degree of "molecular engineered sintering" in oxide materials.

According to the invention the relationship between the degree of hydrolysis of a metal alkoxide and the density of the metal oxide which results after sintering is first experimentally determined so that a predetermined density can be obtained by the use of a particular water to alkoxide ratio during hydrolysis.

The relationship between the amount of water used in the hydrolysis of the alkoxide and the density of the resulting sintered metal oxide is determined by hydrolyzing several samples of the metal alkoxide with various amounts of water in a diluent, heating to convert the resulting hydroxide to the oxide and to sinter it, and measuring the resulting density. For example, the relationship can be determined with sufficient accuracy for most applications by hydrolyzing alkoxide samples with 1, 10 and 20 moles of water per mole of alkoxide. If a metal oxide of maximum sintered density is desired, for most alkoxides this can be accomplished by hydrolyzing with about 5 to about 10 moles of water per mole of alkoxide. If less than 5 moles of water are used, the density will not be as great and if more than 10 moles of water are used, any further increase in density is usually minimal.

The alkoxides which are useful in this invention may be described by the general formula $M(OR)_n$, where M is an alkoxide-forming metal whose oxides form ceramics, such as one or more of the metals magnesium, barium, tantalum, zinc, cerium, tin, calcium, chromium, cobalt, arsenic, antimony, thorium, yttrium, silicon, uranium, aluminum, zirconium, and titanium. In the formula R is alkyl to $C_6$, and n is the valence of M. Mixtures of alkoxides can be used to produce mixed or doped hydroxides or oxide powders or ceramics. Thus, the resulting oxides can be $MgO$, $BaO$, $Ta_2O_5$, $ZnO$, $CeO$, $SnO$, $CaO$, $Cr_2O_3$, $CoO$, $As_2O_3$, $Sb_2O_3$, $ThO_2$, $Y_2O_3$, $SiO_2$, $UO_2$, $Al_2O_3$, $ZrO_2$, and $TiO_2$. The metal ion is preferably Zr, Al, Ti, Si, Y, or U because these metals form oxides which are widely used in commercial and technological applications.

While it is not always necessary to dilute the water and alkoxide with a diluent, it is preferable to do so because the resulting produce is more homogeneous, and has a smaller particle size. Dilution also permits a controlled rate of hydrolysis. The diluent is a neutral liquid in which water and the alkoxide are soluble or miscible. The diluent is preferably an alcohol, especially the alcohol which corresponds to the alcohol produced by hydrolysis of the alkoxide to facilitate solubility even though any liquid in which both water and alcohol is soluble is suitable. Liquid alcohols should be used to avoid the necessity of heating the mixture to cause fluidity. Other suitable diluents include glycols, ether, and benzene. The amount of diluent used is somewhat important is some systems, e.g., zirconia, and can be varied considerably but is preferably from 1/2 to 5 volumes per volume of water and alkoxide. Alkoxide and/or water should preferably be separately diluted in the diluent before these two reactants are brought together in order to avoid subjecting the initial interaction of alkoxide to high concentrations of water which would cause nonuniform hydrolysis resulting in inhomogeneous end product.

Once the mixture of the alkoxide and water has been formed, the corresponding hydroxide will immediately precipitate according to the generalized equation

$$M(OR)_n + nH_2O \rightarrow M(OH)_n + nR(OH)$$

The hydroxide may be collected by drying, filtering, decantation, or other appropriate methods. It can be converted to the oxide by heating at from 400 to 500°C. (In the case of zirconium a hydrated oxide instead of a hydroxide forms.) Alternatively, the hydroxide can be heated directly to the sintering temperature of the oxide without producing the oxide as a separate product. The hydroxide or the oxide can then be sold for use in the manufacture of various ceramic articles by sintering.

Sintering temperatures typically range from 1000 to 1500°C with greater densities being achieved at the higher temperatures. Pressure may also be used during sintering as is well known in the ceramic art. At whatever temperature and pressure is selected for sintering however, the metal oxide will be denser if it is hydrolyzed with the appropriate amount of water selected according to the method of this invention.

Of the metal alkoxides included within the scope of this invention, aluminum alkoxides are somewhat unusual in that aluminum hydroxides exist in two forms, mono-hydroxide and trihydroxide, and it was found that the aluminum oxide, $Al_2O_3$ derived by calcination of these two hydroxides has different sintering properties. When an aluminum alkoxide is hydrolyzed at temperatures greater than 80°C a crystalline monohydroxide known as boehmite is produced.

$$Al(OR)_3 + 2H_2O \xrightarrow{T>80°C} \underset{\text{Boehmite}}{AlO(OH)} + 3ROH$$

When the temperature of hydrolysis is less than about 80°C, an amorphous form of the same monohydrate is produced which can be converted to the crystalline boehmite form upon heating to temperatures greater than about 80°C. Or, as will be discussed, this monohydroxide can be converted to trihydroxide. When either monohydrate form is heated above about 500°C it is converted to aluminum oxide.

$$2A1O(OH) \rightarrow Al_2O_3 + H_2O$$

However, if the monohydroxide form, which is always the initial hydrolysis product, is converted into trihydroxide form, $Al_2OH_3$, before calcining, an aluminum oxide powder, $Al_2(OH)_3$, which can be sintered to

higher densities results. (See Example 1). Formation of the trihydrate can be accomplished by using a monohydroxide which was formed by hydrolysis at temperatures below 80°C. That monohydroxide is aged in water at temperatures of less than 80°C, e.g. room temperature, for a time of at least about 20 hours, which results in a crystalline and stable aluminum trihydroxide known as "bayerite."

$$AlO(OH) + H_2O \rightarrow \underset{\text{Bayerite}}{Al(OH)_3}$$

$$Al(OR)_3 + 3H_2O \rightarrow Al(OH)_3 + 3ROH$$

The aluminum trihydroxide can be heated to temperatures of about 500°C to produce aluminum oxide.

$$2Al(OH)_3 \rightarrow Al_2O_3 + 3H_2O$$

While not wishing to be bound by any theories, it is believed that the reason the quantity of water used during hydrolysis and the type of hydrolytic reaction that occurs has such a great effect on the density of the resulting metal oxide is that different types of structure can be formed during hydrolysis which subsequently sinter to different densities. Formation of hydroxides or hydrates in these systems takes place by the occurrence of two simultaneous reactions: hydrolysis and polymerization. The first reaction occurs between the alkoxide and water, converting some of the alkyl bonds of the alkoxide into hydroxyl bonds, for example:

$$Al(OR)_3 + H_2O \rightarrow (OR)_2Al\text{——}OH + ROH$$

The second reaction, triggered by the first, concurrently occurs between those already hydrolyzed bonds and the unhydrolyzed bonds of the surrounding species:

$$(OR)_2Al - OH + RO - Al^= \rightarrow (OR)_2Al\text{-}O\text{-}Al^= + ROH$$

This latter reaction is a polymerization reaction which eventually leads to condensation of the hydroxide polymers. The rate and nature of these polymerization reactions are determined mainly by the relative molar ratios of alkoxide to water, i.e., $H_2O/M(OR)_n$, dilution of the species with the diluent, and the hydrolysis time and temperature. When these different hydroxide structures are converted to oxides, the oxides will also have different structures which sinter at different rates.

Hydroxide polymers do indeed differ significantly in their molecular structural make-up as a function of the amount of water used in their formation. For example, a hydroxide polymer of the same species, e.g., Ti or Si, can be formed such that it may contain 70% to 90% equivalent oxide by weight when calcined. Figure 2 shows the relationship between the amount of water used in hydrolysis and the oxide content of the resultant hydrolysis products when aluminum butoxide, silicon ethoxide, titanium ethoxide and zirconium butoxide were hydrolyzed and the hydrolysis products were dried at 120°C and calcined to 600°C. It is important to note that the hydroxyl content of these hydroxide polymers is inversely related to the amount of water used during the hydrolysis. Hydroxides with high hydroxyl content (low oxide content) are formed with low water use, and vice versa. This indicates that these hydroxyl groups are not merely absorbed species but are part of the structural make-up, in accordance with the polymerization theory presented here. As shown in Figure 2, the hydrolysis product of zirconium alkoxide contains about 80% $ZrO_2$ by weight, regardless of the amount of water used during hydrolysis. This corresponds to a composition equivalent to $ZrO_2 \cdot 1.7\ H_2O$ for the hydrolysis product. The hydrolysis of zirconium alkoxides by atmospheric moisture yields a similar composition. This unique behavior of zirconium is due to the fact that it does not form true hydroxides. Nevertheless, the amount of water has a substantial impact on the nature of the hydrolysis and polymerization, thus affecting the resultant structure and particle size.

A new polymerized aluminum hydroxide can be produced by this invention. While aluminum monohydroxide has an aluminum oxide content of 85% by weight and aluminum trihydroxide has an aluminum oxide content of 65% by weight, the new polymerized aluminum hydroxides have aluminum oxide contents of from 75 to 81% by weight. (The oxide contents are for dried, unpyrolyzed hydroxides). These hydroxides are produced by controlling the water/alkoxide ratio (see Figure 2), and they sinter to higher densities.

Similarly, while commercial titanium hydroxides have a titanium dioxide content of 69%, novel polymerized titanium hydroxides can be produced by this invention which have a titanium dioxide content of from 73 to 92% by weight. These are also produced by controlling the oxide content (see Figure 2), and they also sinter to greater densities.

The significance of the effect of molecular structure on the sintering of oxides is demonstrated by the fundamentally different behavior of $Al_2O_3$ obtained from trihydroxide versus those aluminas obtained from monohydroxides (see Figure 1). Effects on sintering occur as a result of structural differences introduced

into the molecular network during hydrolysis and carried on to the oxide state. A portion of the differences in the rate of densification shown in Figure 1 between various samples may be due to a particle size effect, but this should diminish in the later stages of sintering since no separate particles exist at that stage. Dramatic differences in sintering observed at all temperatures cannot be explained by a simple particle size effect. The contention that the origin of the effect lies in the molecular structure rather than in particle size is further supported by the fact that the silicon alkoxides which do not form individual particles during hydrolysis follow the similar behavior.

Nevertheless this invention allows not only control of structure, but also of the particle size. Therefore double benefit can be obtained by controlling internal structure of particles as well as their size. For example, slow and extended polymerization reactions result in larger particles than fast reactions induced by high water and concentrated species.

The invention will now be illustrated with reference to the following Examples:

Example 1

A 50% by weight solution of zirconium butoxide, $Zr(OC_4H_9)_4$ in butanol, was hydrolyzed with varying amunts of water diluted in butanol such that the equivalent oxide concentration of the final mixture was about 5% by weight. Hydrolysis products were dried at −120°C, and calcined to 600°C, converting to oxide. The oxide powders were then pressed into ⅝″ (13cm) diameter discs under 10,000 psi (6896 MPa). The sintering and densification behavior of these $ZrO_2$ samples was observed as they were held for 2 hours at 1350°C.

The sintering behaviour of $ZrO_2$ is strongly influenced by hydrolysis conditions, as shown in Figure 4 and the Table below. $ZrO_2$ samples produced via 1 mole $H_2O$ hydrolysis showed no coherence and consequently very little shrinkage at 1350°C, whereas the oxides formed via 10 and 15 moles $H_2O$ hydrolysis shrank dramatically, had a glassy appearance, and were dense and very strong. Vacuum firing did not change this result significantly; there was, however, a slight improvement in coherency for the samples hydrolyzed with the lower amounts of water in vacuum. It was also noted that if the hydrolysis was done at 50 to 80°C, further improvement in densities was achieved over room temperature hydrolysis.

| Hydrolysis Rates (mole/mole alk.) | Linear Shrinkage (%) | Density ($g/cm^3$) | Condition of Samples |
|---|---|---|---|
| 0.5 | <5 | 3.13 | Very little coherency, powder |
| 1.0 | <2 | 3.13 | Very little coherency, powder |
| 3.0 | 19 | 3.91 | Coherent, weak |
| 5.0 | 27 | 4.25 | Coherent |
| 10.0 | 26 | 4.50* | Strong |
| 15.0 | 26 | 4.55* | Strong |
| >100 | ~26 | 4.69* | Strong |
| Air Humidity Hyd. | ~2 | 3.17 | Weak |
| Commercial $ZrO_2$** | 6 | 4.32 | Cracked extensively |

*In higher pressing conditions, these samples gave densities in the range of 5.2 to 5.4 $g/cm^3$ 2 hours at 1350°C were crack-free and strong.

**Fisher Z-83

Example 2

As in Example 1, $ZrO_2$ powder was produced by hydrolyzing zirconium butoxide with 15 moles of water. However, before the hydrolysis, zirconium butoxide was mixed with yttrium iso-propoxide in an amount such as to give 85% equivalent $ZrO_2$ and 15% equivalent $Y_2O_3$ in the final product. The hydrolysis product was calcined, pressed into discs and fired at 1350°C. A dense, doped and stabilized zirconia resulted.

This doping and stabilization can also be done by using soluble salts of dopants dissolved in the hydrolysis liquid, such at yttrium acetate dissolved in the hydrolysis water. Other dopants such as CaO can also be used.

Example 3

Three hydroxides were prepared by the hydrolysis of aluminum secondary butoxide. The first hydroxide (A) was prepared by a non-liquid hydrolysis by atmospheric moisture. The second (B) was prepared in excess hot (better than 80°C) water and the third (C) was prepared in water at room temperature (20°C), followed by aging for 24 hours at room temperature. These processes yielded, respectively, an amorphous monohydroxide, a crystalline monohydroxide, and a trihydroxide. All three hydroxides were converted to oxides by calcining at 600°C and pressing into ⅝" (13cm) diameter discs at 10,000 psi (68.96 MPa). The densification behavior of these samples was observed as they were held for two hours at various temperatures. The following table gives the results. The weight loss was from drying at 120°C to calcining at 600°C.

| Hydrolysis Method | % wt loss of Hydroxide | Density of Pressed Pellets | Density ($g/cm^3$) 1350°C | 1650°C | 1850°C |
|---|---|---|---|---|---|
| (A) Air Humidity | ~41 | 0.80 g/cm | 2.18 | 2.71 | 3.01 |
| (B) Hot Water ( 80°C) | ~20 | 1.01 | 1.92 | 2.46 | 2.84 |
| (C) Cold Water ( 25°C + 24 hrs) | ~30 | 1.02 | 1.50 | 2.67 | 3.45 |

Figure 1 presents these results in graphic form and shows that at temperatures above about 1650°C aluminum oxide derived from aluminum trihydroxide (C) sinters to a greater density than does aluminum oxide derived from amorphous aluminum monohydroxides (A) and crystalline aluminum monohydroxide (B). There is a fundamental and important difference in the sintering behavior of the aluminum oxide obtained from the three methods of hydrolyzing the alkoxide which cannot be accounted for on the basis of gross particle size, especially at higher temperatures. (The importance of particle size is significant in the initial stages of sintering and later diminishes as separate particles no longer exist.) Differences between the two oxide powders produced from monohydroxides, however, may be due to differences in the initial particle size. Because of the limited hydrolysis and reduced mobility of species in the solid state, which greatly restricts polymerization, non-liquid hydrolysis by atmospheric moisture is expected to produce a very small sized aluminum monohydroxide polymer, besides yielding an amorphous product. The small particle polymer size is indeed indicated by the higher weight loss of this hydroxide during calcining.

Example 4

Aluminum secondary butoxide was hydrolyzed with various amounts of water in secondary butyl alcohol. Water and aluminum secondary butoxide were separately diluted in amounts of alcohol so that the resulting mixture contained 4 weight percent equivalent oxide. Bayerite formation was prevented by performing the hydrolysis at about 50°C and beating the slurries to 100°C immediately after hydrolysis. The appearance of the precipitates in these samples varied considerably as a function of water content. For example, at around 5 moles of water per mole of alkoxide, the volume of precipitate reached a maximum and appeared to be ten times as much as the amount produced by 1 and 20 moles of water hydrolysis. These hydroxides were dried, calcined to oxide at 600°C, pressed into pellets and sintered at various temperatures. Dramatic differences in the shrinkage of the samples were observed. The precursor hydroxides formed by 3 to 5 moles of hydrolysis water produced oxides which showed the most shrinkage. Thus the structural variations brought about at room temperature during hydrolysis made their effect felt strongly at temperatures as high as 1850°C. One of the most dramatic effects was the degree of resistance shown to sintering by the oxides formed via 2 moles or less of water hydrolysis. Samples produced from these oxides showed very little shrinkage at all temperatures, including 1850°C. Figure 3 presents the results of these experiments. When the entire heat treatment was done in vacuum, the shrinkage figures did not change significantly. However, samples produced via less than 3 moles of hydrolysis turned black, indicating the presence of organic components.

Scanning micrographs of fracture surfaces of the samples obtained via various hydrolysis techniques and sintered at 1350°C show dramatic microstructural differences. The sample produced via one mole of hydrolysis water consisted of sharp-edged particles separated from each other by relatively large spaces. As the hydrolysis water increased to 2 moles, the texture became much finer and resembled that of a well-compacted powder. Alumina produced using 5 moles of hydrolysis water had a texture resembling that of glass. Electron micrographs showed that alumina produced by low water hydrolysis retained its particulate and fractured appearance with large intergranular spaces even at 1650°C. The causes of these differences in the microstructure originate during hydrolysis, where not only the amount of water but the temperature of the hydrolysis have a lasting and profound effect. A hotter hydrolysis appears to contribute to the formation of sharply defined separate particles and enhances the resistance to sintering characteristically exhibited by the oxide produced via less than 2 moles of water hydrolysis. What seems to be individual particles about 2 microns in size actually consist of structural units or polymer regions about 50 µm in size. Figure 3 shows the effect of hydrolysis water on the sintering and shrinkage of these $Al_2O_3$ samples.

Example 5

A 50% solution of titanium ethoxide, $Ti(OC_2H_5)_4$ in ethanol was hydrolyzed with a varying amount of water diluted in ethanol such that the equivalent oxide concentration of the final mixture was about 5% by weight. Hydrolysis products were dried at about 120°C and calcined at 600°C. The oxide contents of the hydrolysis products as a function of amount of hydrolysis water is shown in the following tables.

| Sample | Amount of hydrolysis water moles/mole alk. | Equivalent Oxide Content of Hydroxide* | Density ($g/cm^3$) (1350°C - 2 hrs.) |
|---|---|---|---|
| 1 | 2 | 67% | 2.67 |
| 2 | 3 | 69 | 2.90 |
| 3 | 5 | 73 | 3.40 |
| 4 | 10 | 82 | 3.80 |
| 5 | 20 | 97 | 3.81 |

*Dried at 130°C, calcined 600°C

The oxide content of the hydrolysis product of titanium alkoxide is strongly affected by the amount of

hydrolysis water. The hydrolysis product contains approximately 67% oxide by weight when 2 moles of water are used and rises to over 91% with the use of 20 moles of water (Figure 2). Hydrolysis by atmospheric moisture gives about 83% equivalent oxide.

Sintering behavior of $TiO_2$ is also strongly influenced by hydrolysis conditions. Titanium oxides densify greatly at 1350°C, when they are produced by high water hydrolysis (see the above table and Figure 4). Electron micrographs of fractured structures of titanium oxides shown a glassy appearance. When titanium alkoxide is hydrolyzed with small amounts of water the resultant hydroxides produce sharp granular oxide particles when calcines. The particles produced by high water hydrolysis, however, have a light fluffy look where the boundaries are not smooth and sharply defined. During sintering, polymers coalesce into 1 to 5 μm sizes masses which in turn bunch into separate units having 20 to 50 μm sizes.

Example 6

Similar sintering behavior was noted for numerous other oxides which were investigated including $Y_2O_3$, MgO, $SiO_2$, and $UO_2$, with slight differences in rate and degree. Among these, the silica system presents a somewhat unusual situation in that the hydrolysis of silicon alkoxides with water produces soluble polymer species which gel into a clear continuous polymer rather than condensing into a particulate precipitate.

To investigate sintering in the silica system, silicon tetraethoxide was hydrolyzed with various amounts of water in alcohol. The hydrolysis product, which is a clear solution in this case, was gelled, dried at 120°C, and calcined to the oxide form at 600°C. The following table gives the oxide content of the polymers as a function of the amount of water of hydrolysis.

| Sample | Amount of Hydrolysis water (mole/m. alkoxide) | % Equivalent Oxide Content of the hydroxide |
|---|---|---|
| 1 | 2 | ~70 |
| 2 | 3 | 78 |
| 3 | 5 | 85 |
| 4 | 10 | 91 |
| 5 | 27 | 92 |

As the above table and Figure 2 shows, this system can be polymerized to contain an excess of 92% oxide by weight at room temperature. The oxide content falls below 70% by weight when the hydrolysis water falls to 2 moles or less. These samples were ground, pressed into discs and sintered at 1350°C. The sintering behavior was similar to that of other oxides investigated. However, a fast heating causes entrapment of gases and bloating, which must be prevented.

**Claims**

1. Use of a metal oxide powder capable of sintering to a high density being obtained by hydrolyzing a metal alkoxide having the general formula $M(OR)_n$, where M is an alkoxide forming metal, R is alkyl to $C_6$ and n is the valence of M, with from 5 to 10 moles of water per mole of said alkoxide to produce a hydroxide collecting said hydroxide and heating the latter hydrate to produce said metal oxide powder for the manufacture of ceramics.

2. Use as claimed in claim 1, characterized in that the metal oxide powder is selected from MgO, BaO, $Ta_2O_5$, ZaO, CeO, SnO, CaO, $Cr_2O_3$, CoO, $As_2O_3$, $Sb_2O_3$, $ZrO_2$, $TiO_2$, $ThO_2$, $Y_2O_3$, $SiO_2$, $UO_2$, $Al_2O_3$, $TiO_2$, and mixtures thereof.

3. Use as claimed in claim 2, characterized in that the metal oxide is selected from $ZrO_2$, $TiO_2$, $SiO_2$, $Y_2O_3$, $Al_2O_3$, $UO_2$, and mixtures thereof.

4. Use as claimed in claim 2, characterized in that the powder is an oxide of zirconia doped with up to 15% of a stabilizer.

5. Use as claimed in claim 4, characterized in that the stabilizer is $Y_2O_3$, CaO, or mixtures thereof.

6. Use as claimed in any of claims 1 to 5 characterized in that the hydrolysis was performed in the presence of from ½ to 5 volumes of a diluent per volume of water and alkoxide.

7. Use as claimed in claim 6, characterized in that the diluent is the alcohol which was released during said hydrolysis.

8. Use as claimed in claim 6, characterized in that the water and alkoxide were diluted with diluent prior to mixing.

9. Use as claimed in any of claims 1 to 8, characterized in that the amount of water is less than 10 moles of water per mole of alkoxide.

10. Use as claimed in any of claims 1 to 9, characterized in that the metal oxide is $Al_2O_3$, which was obtained by heating bayerite.

11. Use as claimed in claim 10, characterized in that the bayerite was obtained by hydrolyzing an

aluminum alkoxide at a temperature under 80°C to produce an hydroxide which was aged at less than 80°C for at least 20 hours to convert it to said bayerite.

12. Use as claimed in claim 10, characterized in that the bayerite was produced by hydrolyzing an aluminum alkoxide at less than 80°C for at least 20 hours.

13. A method of forming a high density ceramic body characterized by sintering a metal oxide powder obtained as defined in claim 1.

14. A method as claimed in claim 13 wherein the metal oxide is characterized as in any of claims 2 to 12.

**Patentansprüche:**

1. Verwendung eines zu einer hohen Dichte sinterungsfähigen Metalloxidpulvers, das erhältlich ist durch Hydrolysierung eines Metallalkoxides, das die allgemeine Formel $M(OR)_n$ besitzt, wobei M ein Alkoxid bildendes Metall, R ein Alkyl bis $C_6$ und n die Wertigkeit von M ist, mit 5 bis 10 Molen Wasser pro Mol des Alkoxids zur Erzeugung eines Hydroxids, Sammeln des Hydroxides und Erhitzen des letztgenannten zur Erzeugung des Metalloxidpulvers, für die Herstellung von Keramiken.

2.Verwendung nach Anspruch I, dadurch gekennzeichnet, daß das Metalloxidpulver ausgewählt wird aus MgO, BaO, $Ta_2O_5$, ZaO, CeO, SnO, CaO, $Cr_2O_3$, CoO, $As_2O_3$, $Sb_2O_3$, $ZrO_2$, $TiO_2$, $ThO_2$, $Y_2O_3$, $SiO_2$, $UO_2$, $Al_2O_3$, $TiO_2$, und Mischungen davon.

3. Verwendung nach Anspruch 2, dadurch gekennzeichnet, daß das Metalloxid ausgewählt ist aus $ZrO_2$, $TiO_2$, $SiO_2$, $Y_2O_3$, $Al_2O_3$, $UO_2$, und Mischungen davon.

4. Verwendung nach Anspruch 2, dadurch gekennzeichnet, daß das Pulver ein Oxid von Zirkonia ist, dotiert mit bis zu 15% eines Stabilisators.

5. Verwendung nach Anspruch 4, dadurch gekennzeichnet, daß der Stabilisator $Y_2O_3$, CaO oder Mischungen davon ist.

6. Verwendung nach einem der Ansprüche 1 bis 5, dadurch gekennzeichnet, daß die Hydrolyse in der Anwesenheit von ½ bis 5 Volumen eines Verdünnungsmittels pro Volumen Wasser und Alkoxid durchgeführt wurde.

7. Verwendung nach Anspruch 6, dadurch gekennzeichnet, daß das Verdünnungsmittel der Alkohol ist, der während der Hydrolyse freigegeben wurde.

8. Verwendung nach Anspruch 6, dadurch gekennzeichnet, daß das Wasser und das Alkoxid mit dem Verdünnungsmittel vor dem Mischen verdünnt wurden.

9. Verwendung nach einem der Ansprüche 1 bis 8, dadurch gekennzeichnet, daß die Menge des Wassers geringer ist als 10 Mole Wasser pro Mol Alkoxid.

10. Verwendung nach einem der Ansprüche 1 bis 9, dadurch gekennzeichnet, daß das Metalloxid $Al_2O_3$ ist, das durch Erhitzen von Bayerit erhalten wurde.

11. Verwendung nach Anspruch 10, dadurch gekennzeichnet, daß das Bayerit erhalten wurde durch Hydrolysierung eines Aluminiumalkoxides bei einer Temperatur unterhalb von 80°C, um ein Hydroxid zu erzeugen, das bei weniger als 80°C für zumindest 20 Stunden gealtert wurde, um es zu dem Bayerit umzusetzen.

12. Verwendung nach Anspruch 10, dadurch gekennzeichnet, daß das Bayerit erzeugt wurde durch Hydrolisierung eines Aluminiumalkoxides bei weniger als 80°C für zumindest 20 Stunden.

13. Ein Verfahren zur Bildung eines hochdichten keramichen Körpers, gekennzeichnet durch Sintern eines Metalloxid-pulvers, das wie in Anspruch 1 definiert erhalten wurde.

14. Ein Verfahren nach Anspruch 13, wobei das Metalloxid gekennzeichnet ist wie in einem der Ansprüche 2 bis 12.

**Revendications**

1. Emploi d'une poudre d'oxyde métallique capable de frittage en vue d'obtenir une densité élevée, par hydrolyse d'un alkcoxyde de métal ayant la formule générale $M(OR)_n$, dans laquelle M est un métal formant un alcoxyde, R est un alcoyle jusqu'en $C_6$ et n est la valence de M avec 5 à 10 moles d'eau par mole du dit alcoxyde pour produire un hydroxyde, en rassemblant ledit hydroxyde et en chauffant ce dernier hydrate pour produire ladite poudre d'oxyde métallique pour la fabrication de céramiques.

2. Emploi comme revendiqué dans la revendication 1, caractérisé en ce que la poudre d'oxyde métallique est choisi parmi MgO, BaO, $Ta_2O_5$, ZaO, CeO, SnO, CaO, $Cr_2O_3$, CoO, $As_2O_3$, $Sb_2O_3$, $ZrO_2$, $TiO_2$, $ThO_2$, $Y_2O_3$, $SiO_2$, $UO_2$, $Al_2O_3$, $TiO_2$, et les mélanges de celles-ci.

3. Emploi comme revendiqué à la revendication 2, caractérisé en ce que l'oxyde métallique est choisi parmi $ZrO_2$, $TiO_2$, $SiO_2$, $Y_2O_3$, $Al_2O_3$, $UO_2$ et les mélanges de ceux-ci.

4. Emploi comme revendiqué à la revendication 2, caractérisé en ce que la poudre est un oxyde de Zirconium dopé avec jusqu'à 15% d'un stabilisant.

5. Emploi comme revendiqué à la revendication 4, caractérisé en ce que le stabilisant est $Y_2O_3$, CAO ou des mélanges de ceux-ci.

6. Emploi comme revendiqué dans chacune des revendications 1 à 5, caractérisé en ce que l'hydrolyse a été effectuée en présence de ½ à 6 volumes d'un diluant par volume d'eau et d'alcoxyde.

7. Emploi comme revendiqué dans la revendication 6, caractérisé en ce que le diluant est l'alcool qui est libéré durant ladite hydrolyse.

8. Emploi comme revendiqué à la revendication 6, caractérisé en ce que l'eau et l'alcoxyde ont été dilués avec le diluant préalablement au mélange.

9. Emploi comme revendiqué dans chacune des revendications 1 à 8, caractérisé en ce que la quantité d'eau est inférieure à 10 moles d'eau par mole d'alcoxyde.

10. Emploi comme revendiqué dans chacune ds revendications 1 à 9, caractérisé en ce que l'oxyde métallique est $Al_2O_3$ qui a été obtenue ne chauffant de la bayerite.

11. Emploi comme revendiqué à la revendication 10, caractérisé en ce que la bayerite a été obtenue en hydrolysant un alcoxyde d'aluminium à une température en-dessous de 80°C pour produire un hydroxyde qui a été vieilli à une température inférieure à 80°C pendant au moins 20 heures, de façon à le convertire en ladite bayerite.

12. Emploi comme revendiqué à la revendication 10, caractérisé en ce que la bayérite a été produite en hydrolysant un alcoxyde d'Aluminium à une température inférieure à 80°C pendant au moins 20 heures.

13. Procédé pour produire un corps en céramique à haute densité, caractérisé par la frittage d'une poudre d'oxyde métallique obtenue selon la revendication 1.

14. Procédé selon la revendication 13 dans laquelle l'oxyde métallique est caractérisé suivant l'une quelconque des revendications 2 à 12.

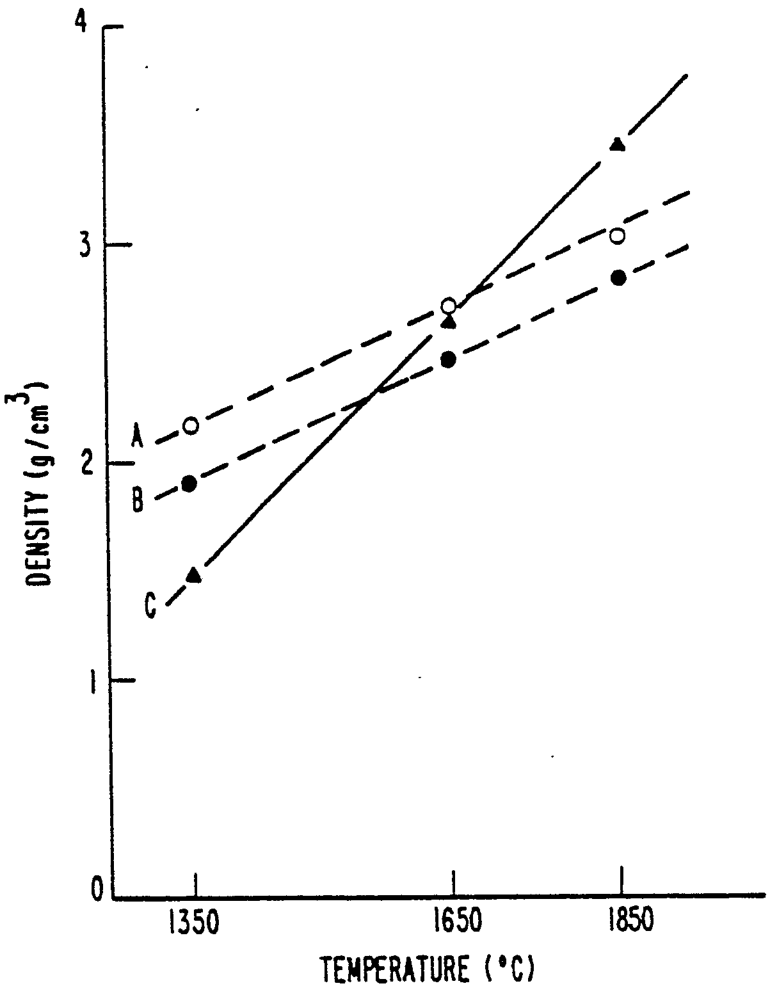


FIG. 1

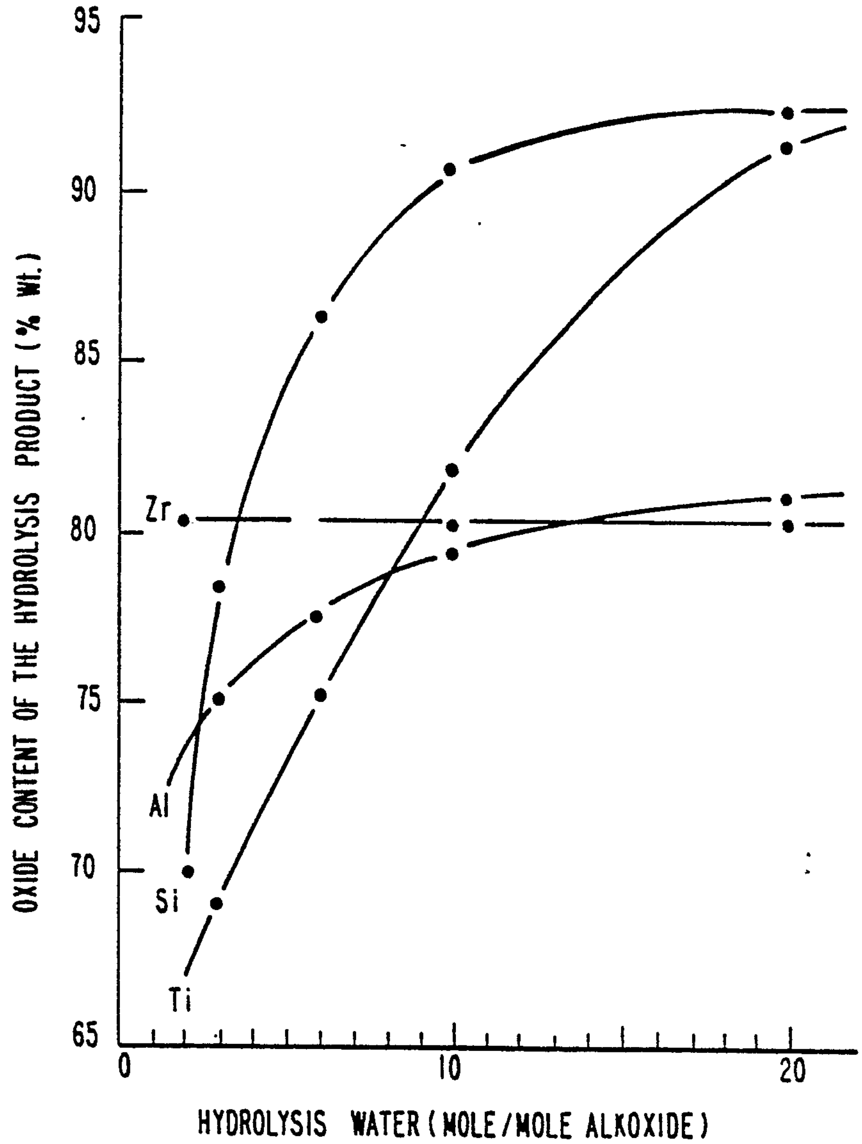
95
90
85
80
75
70
65
OXIDE CONTENT OF THE HYDROLYSIS PRODUCT (% Wt.)
Zr
Al
Si
Ti
0
10
20
HYDROLYSIS WATER (MOLE/MOLE ALKOXIDE)

FIG. 2

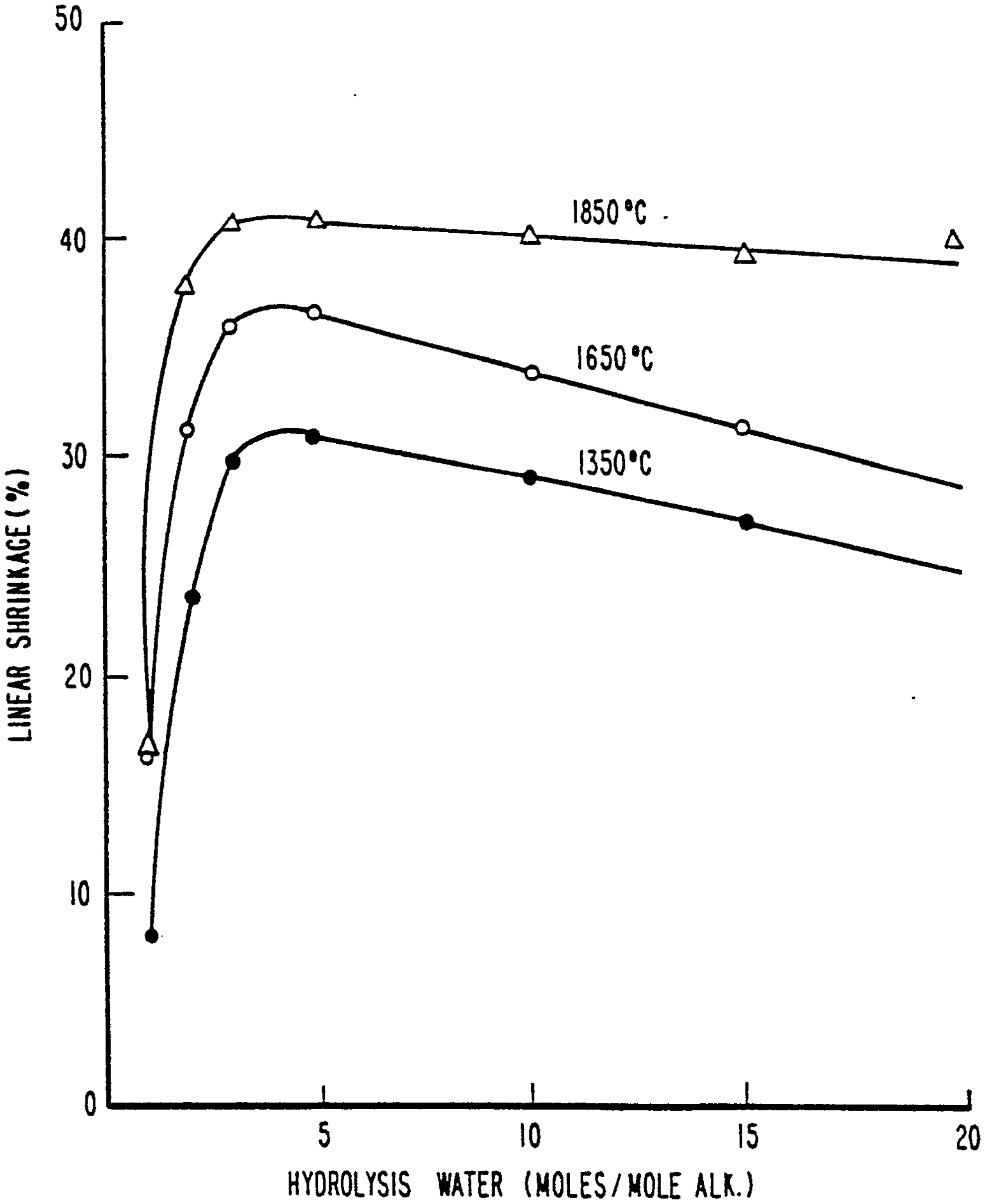
50
40
30
20
10
0
LINEAR SHRINKAGE (%)
1850°C
1650°C
1350°C
5
10
15
20
HYDROLYSIS WATER (MOLES/MOLE ALK.)

FIG. 3

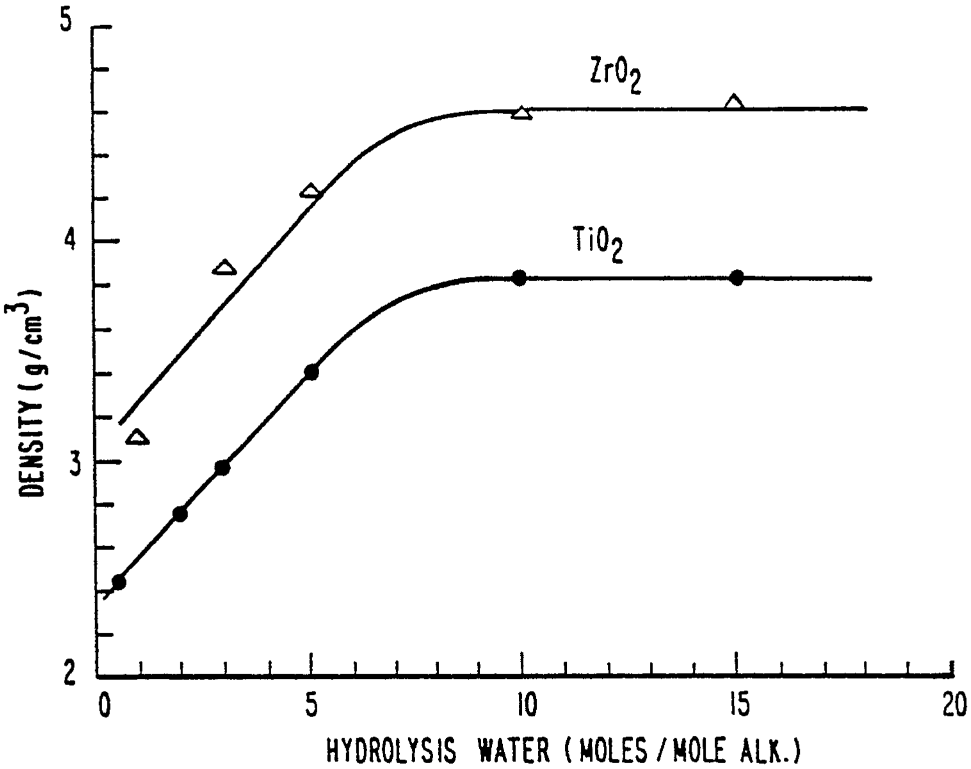

5
4
3
2
DENSITY ( g/cm3 )
ZrO2
TiO2
0
5
10
15
20
HYDROLYSIS WATER ( MOLES / MOLE ALK.)


FIG. 4